# EUROPÄISCHE PATENTANMELDUNG

(11) **EP 1 241 772 A1**
(43) Veröffentlichungstag der Anmeldung: **18.09.2002**
(21) Anmeldenummer: 02004890.6
(22) Anmeldetag: 04.03.2002
(51) Int. Cl.: H02K 9/16

(54) **Luftgekühlte elektrische rotatorische Maschine**

(30) Priorität: 15.03.2001 DE 10112532
(71) Anmelder: SIEMENS AKTIENGESELLSCHAFT, 80333 München (DE)
(72) Erfinder: Greubel, Klaus, 97616 Bad Neustadt (DE); Hellmann, Heinrich, 49844 Bawinkel (DE); Schueller, Uwe, Dr., 98693 Ilmenau (DE)

(57) **Zusammenfassung**

Die Erfindung betrifft eine luftgekühlte rotatorische Maschine, welche durch einen Luftstrom der durch einen Lüfter erzeugt ist gekühlt ist, wobei das Statorpaket mit Hilfe von strömungsmäßig getrennten Kühlkanälen von Luftströmen in komplementären Bewegungsrichtungen beströmt ist.

## Beschreibung

Die Erfindung betrifft eine luftgekühlte elektrische rotatorische Maschine mit einem Statorpaket, einem Rotor, einem Luftspalt zwischen Stator und Rotor, und Wicklungsköpfen an den achsseitigen Stirnseiten des Statorpaketes.

Aus der deutschen Patentschrift 672 623 ist eine Kühlanordnung für geschlossene elektrische Maschinen, insbesondere Drehstrommotoren bekannt. Im Inneren der geschlossenen Maschine sind zwei Lüfter angeordnet, welche einen Kühlluftstrom erzeugen, dessen Rückkühlung in am Außenumfang der Maschine angeordneten geschlossenen Kanälen oder Kanalgruppen dadurch erfolgt, dass diese ihrerseits von einem äußeren Kühlmittelstrom bespült werden. Der innere Kühlluftstrom wird an dem jeweiligen Ende der Maschine durch Umlenkwände schleifenförmig von einem Längskanal bzw. einer Kanalgruppe in umgekehrter Richtung in den folgenden Längskanal bzw. die folgende Kanalgruppe geführt.

Dieses Kühlkonzept benötigt nachteiligerweise an beiden Stirnseiten des Ständerpaketes einen Lüfter, welcher dort die schleifenförmige Umleitung der Luft bewirkt. Die Verwendung von zwei Lüftern erhöht nachteilig die Ausfallwahrscheinlichkeit der Kühlung und verursacht höhere Produktionskosten im Vergleich zu Systemen mit nur einem Lüfter. Des Weiteren ist das Vorhandensein zweier getrennte Kühlsysteme von Nachteil. Die Wärme muss vom inneren Kühlsystem an das äußere Kühlsystem abgegeben werden. Entsprechend den vorgegebenen Wärmedurchgangskoeffizienten wird die Kühlwirkung durch die Kühlung an der Maschine gemindert. Der Gesamtaufbau der geschlossenen elektrischen Maschine zeigt keine modularen variablen Strukturen, so dass diese Maschine nur schwer in unterschiedlichen Ausprägungen zu fertigen ist. Dies gilt insbesondere für Typen unterschiedlicher Maschinenlänge, bei denen der Aufbau mit jedem Typ gesondert zu realisieren ist. Die Konstruktion der Maschine erfolgt konkret für die Ausführungsform der Kühlung.

Aufgabe der vorliegenden Erfindung ist das Erzielen einer kostengünstigen effektiven Luftkühlung einer elektrisch rotatorischen Maschine. Insbesondere soll die effektive und kostengünstige Luftkühlung auf unterschiedlichen Maschinentypen, wobei hier insbesondere die Maschinenlänge relevant ist, anwendbar sein.

Die Lösung der Aufgabe erfolgt mit einer luftgekühlten, elektrischen rotatorischen Maschine mit Mitteln zur kostengünstigen und effektiven Luftkühlung.

Die Kühlung selbst gelingt durch einen Luftstrom, welcher von nur einem Lüfter erzeugt ist, und zumindest zur Kühlung des Statorpaketes beiträgt. Der Luftstrom wird in strömungsmäßig voneinander getrennten Kühlkanälen geleitet, welche sich entweder im und/oder am Statorpaket befinden. Im Statorpaket befindliche Kühlkanäle sind in geeigneter Weise z.B. durch das Stanzen in die Einzelbleche des Blechpaketes eingebracht. Durch die schleifenförmige Umleitung der Luft an den Stirnseiten des Statorpaketes wird ein beströmen mit Luft in komplementären Bewegungsrichtungen gestattet. Die schleifenförmige Führung der Luft ist durch zwei Umstände gekennzeichnet. Zum einen wird die Luft um die Wicklungsköpfe an den Stirnseiten des Statorpaketes herumgeführt, wodurch sie eine kreisartige fasst geschlossene Bahn beschreibt und somit eine Schleifenform annimmt und zum anderen wird die schleifenförmige Führung der Luft durch die strömungsmäßig voneinander getrennten Kühlkanäle geprägt, da dieser Umstand wenigstens eine Richtungsumkehr von 180° erfordert.

Wird das Statorpaket von nur einem Luftstrom in nur eine Richtung gekühlt so nimmt die Temperaturdifferenz zwischen Lufttemperatur und Statorpakettemperatur entsprechend der bereits im Kühlkanal zurückgelegten Wegstrecke ab. Diese stark unterschiedliche und von dem Eintrittspunkt der kühlenden Luft abhängige Kühlwirkung wird bei einer Beschickung der strömungsmäßig voneinander getrennten Kühlkanäle des Statorpaketes mit Luft entgegengewirkt. Im Stator ergibt sich zwischen den strömungsmäßig voneinander getrennten Kühlkanälen ein Temperaturausgleich. Dieser Temperaturausgleich ergibt sich an jeder beliebigen Position zur Längsachse. Wird beispielsweise die Position auf dem Statorpaket betrachtet, welche einerseits durch den ersten Lufteintritt in einen Kühlkanal des Statorpaketes gekennzeichnet ist und zum anderen aber auch in einem nebenliegenden, getrennten Kühlkanal durch den Austritt des Kühlluftstromes, so ergibt sich dort ein Temperaturausgleich. Der Ausgleich erfolgt an dieser Position - in diesem Bereich - durch Luft, die zu einem erst einen Wicklungskopf gekühlt hat und zum anderen bereits zwei Wicklungsköpfe beströmt hat und zusätzlich zweimal Kühlkanäle im Statorpaket durchlaufen hat. Für jeden axialen Bereich des Statorpaketes ergibt sich so eine mittlere Kühlwirkung.

Der den Luftstrom erzeugende Lüfter ist vorzugsweise ein Eigenlüfter, was insbesondere bei Komplettsystemen vorteilhaft ist. Der Eigenlüfter ist vorzugsweise an einer Seite der Stirnseiten des Statorpaketes nach den Wicklungsköpfen positioniert und Ausgangspunkt für den Luftstrom, welcher durch die Maschine geführt ist. Der Begriff Eigenlüfter gibt nur Aufschluss darüber, dass der Lüfter Teil der elektrischen rotatorischen Maschine ist. Dabei kann er sich auch an anderen Positionen des Motors befinden. Die Luftströme sind dann durch vorzusehende Mittel so zu führen, dass sich die erfindungsgemäße Luftströmung einstellt.

Insbesondere bei größeren luftgekühlten elektrisch rotatorischen Maschinen oder auch bei Gruppen von elektrisch rotatorischen Maschinen kann die Luftkühlung der elektrisch rotatorischen Maschine auch durch einen Fremdlüfter erfolgen. Der vom Fremdlüfter erzeugte Luftstrom hat zumindest einen Einlass in das Kühlluftsystem der elektrisch rotatorischen Maschine. Die Nutzung eines Fremdlüfters hat den Vorteil, einen Lüfter für verschiedene elektrisch rotatorische Maschinen oder für verschiedene zu kühlende Einrichtungen nutzen zu können. Fremdlüfter, welche nicht Teil der elektrischen, rotatorischen Maschine sind, sind vorteilhafterweise zumeist leichter austauschbar. Es sind insbesondere zwei Typen von Fremdlüftern beispielhaft zu nennen. Befindet sich der Lüfter bzw. die Lüftereinrichtung nicht auf der Achse der elektrischen, rotatorischen Maschine, so kann der Lüfter auf dem Gehäuse der elektrischen, rotatorischen Maschine aufgesetzt sein. Werden mehrere elektrische, rotatorische Maschinen durch zumindest einen Lüfter gelüftet, so sind Luftkanäle vorgesehen, welche die Luft auf die einzelnen elektrisch, rotatorischen Maschinen verteilen und diesen zuleiten.

Sowohl im Fall des Eigenlüfters als auch im Fall des Fremdlüfters ist zumindest ein Austrittsbereich für den Luftstrom vorgesehen. Die schleifenförmige Luftstromführung an den Stirnseiten des Statorpaketes wird durch Mittel vorgegeben, welche zumindest auch einen Teil der Luftströmung radial durch die Wicklungsköpfe führen. Derartige Mittel sind beispielsweise kappenartige Formteile, Luftführungen oder Luftleitschilde die einzeln oder in Verbindung mit einem Motorgehäuse wirken. Durch die radiale Luftführung an den Stirnseiten des Statorpaketes ergeben sich abhängig von der Ausgestaltung der Wicklungsköpfe verschiedene Ausprägungen der Kühlung. Vergossene Wicklungsköpfe werden durch den Kühlluftstrom an den Außenflächen des Vergusses gekühlt. Sind innerhalb des Vergusses durchführende Kühlkanäle ausgeprägt, so wird auch direkt im inneren der Wicklungsköpfe eine Kühlwirkung erzielt und Wärme abgeführt. Auch bei nicht vergossenen Wicklungsköpfen können zumindest Teile des Kühlluftstromes durch die Wicklungsköpfe strömen, um so nicht nur eine Wärmeabfuhr über die Außenfläche der Wicklungsköpfe zu erzielen, sondern auch durch den Luftstrom der durch die Wicklungsköpfe führt.

Die Luftströme bzw. der Luftstrom innerhalb der Maschine wird vorzugsweise so geführt, dass er auch zur Kühlung des oder der Lager der elektrisch, rotatorischen Maschine beiträgt. Hierfür sind beispielhaft Kühlflächen an einem Lager vorgesehen, welche in den Bereich des Kühlluftstromes ragen. Bei dem Lager handelt es sich vorzugsweise um Lager, welche die Achse der elektrischen, rotatorischen Maschine aufnehmen. Mit Hilfe von Luftführungen ist der Luftstrom oder zumindest Ableitungen eines Teils des Luftstroms zu den Lagern geführt. Zur besseren Kühlung sind oberflächenvergrößernde Strukturen am Lager bzw. am Lagerschild geeignet. Auf diese Weise können Lager durch den im Motor vorhandenen Luftstrom gekühlt werden.

Eine vorteilhafte Ausprägung der Erfindung zeigt sich für den Fall, dass die Kühlung des Statorpaketes nicht durch in den Stator integrierte Kühlkanäle erfolgt, sondern diese Aufgabe durch einen Kühlmantel am Statorpaket übernommen wird, welcher Kühlkanäle aufweist. Kühlkanäle sind in unterschiedlicher Weise in den Kühlmantel zu integrieren. Beispielhaft sind hier gießende oder spanende Bearbeitungsverfahren zu nennen. Der Stator wird zumindest teilweise von einem Kühlmantel umfasst, welcher strömungsmäßig voneinander getrennte Kühlkanäle aufweist. Der Kühlmantel ist insbesondere aus dem gleichen Material wie die Formteile an den Stirnseiten des Statorpaketes gefertigt. Vorteilhaft bei einem Kühlmantel ist, dass möglicherweise bereits bestehende Statorkonzepte bzw. Statorformen nicht oder nur wenig abgeändert werden müssen, da der Kühlmantel sich individuell an eine Ausprägung eines Statorpaketes, insbesondere an die Statorlänge, anpassen lässt. Ein Standardmotor ist so mit wenigen Änderungen mit einem neuen Kühlsystem auszustatten.

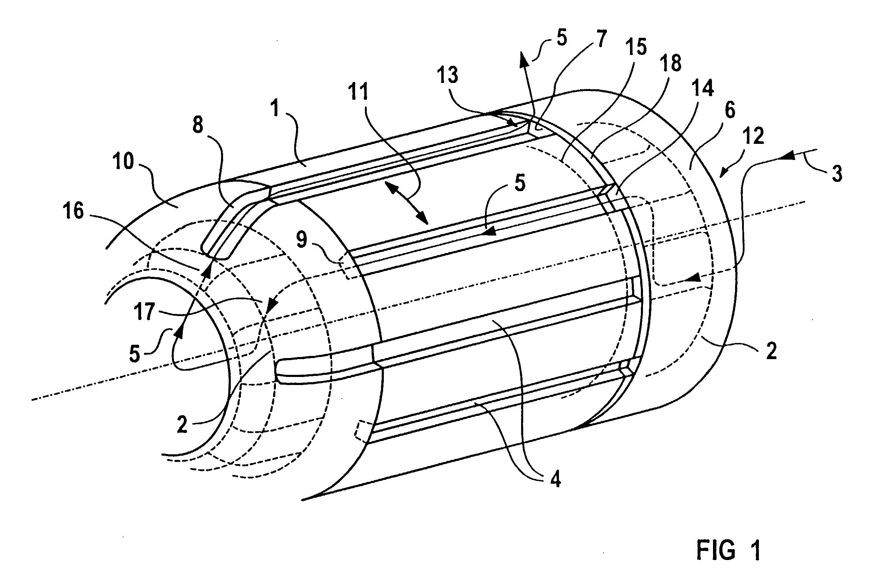

An den Endseiten des Statorpaketes befindet sich vorteilhafterweise zumindest ein kappenartiges Formteil, welches komplementäre Luftströme wechselseitig getrennt in entgegengesetzte radiale Richtungen leitet. Die in entgegengesetzten radialen Richtungen verlaufenden Luftströme strömen innerhalb der Kappen vorzugsweise durch die Wicklungsköpfe. So verläuft bei einem Formteil wie in FIG 1 dargestellt auf der Außenseite des Formteils der Luftstrom radial von der Achse weg, wohingegen auf der Innenseite des einen Formteils, welches zumindest teilweise die Wicklungsköpfe umschließt, der Luftstrom in Richtung Achsmitte verläuft. Hierdurch ergibt sich durch die entgegengesetzten axialen Richtungen auch die Schleifenbildung der Luftströme, welche einerseits durch oder über den Stator verlaufen und dann an den Stirnseiten des Statorpaketes um 180° in die entgegengesetzte Richtung umgeleitet sind.

Werden auf beiden Stirnseiten des Statorpaketes kappenartige Formteile gesetzt, so sind diese vorteilhafterweise identisch ausgeführt. Durch die identische Ausführung der kappenartigen Formteile ergeben sich wirtschaftliche Kosteneinsparungen in der Fertigung der kappenartigen Formteile bzw. der luftgekühlten elektrischen, rotatorischen Maschine.

Unter anderem aus wirtschaftlichen Gesichtspunkten wie auch aus fertigungstechnischen Gesichtspunkten heraus ist es vorteilhaft, die Anzahl einzelner Formteile, wie die der kappenartigen Formteile oder aber die eines Kühlmantels zu minimieren. Dies führt nicht nur zu der Bestrebung die kappenartigen Formteile oder den Kühlmantel einteilig und somit nicht aus mehreren einzelnen Formteilen bestehend auszuführen, sondern auch dazu, Kühlmantel und kappenartiges Formteil einteilig auszuführen. Vorteilhafterweise bildet der Kühlmantel zusammen mit wenigstens einem kappenartigen Formteil ein einteiliges Formteil in welches der Stator und Rotor nur noch einzusetzen ist. Der Kühlmantel bildet so eine Art abgeschlossene, zylinderförmige Anordnung in welcher sich ein Großteil des die Wärmequellen der elektrischen Maschine bildenden der luftgekühlten, elektrischen rotatorischen Maschine befindet.

In die Kühlkanäle des Statorpaketes einsetzbare oberflächenvergrößernde Elemente verbessern den Wärmeübergang zum Kühlmedium. Bei luftgekühlten elektrischen, rotatorischen Maschinen mit Kühlkanälen können so leicht zwei verschiedene Maschinentypen realisiert werden, die sich in ihrer Kühlwirkung unterscheiden. Die oberflächenvergrößernden Elemente bestehen aus einem wärmeleitenden Material und sind so auch sowohl zu anfänglichen als auch nachträglichen Verbesserungen der Kühlwirkung für das System geeignet.

Die folgende Figurenbeschreibung zeigt Ausführungsbeispiele der Erfindung und versteht sich nicht als Einschränkung sondern vielmehr ebenso wie die Unteransprüche als vorteilhafte Ausgestaltung. Die Erfindung sowie weitere vorteilhafte Ausgestaltungen der Erfindung gemäß der Merkmale der Unteransprüche werden schematisch dargestellt und im Ausführungsbeispiel in der Zeichnung näher erläutert. Darin zeigen:
- FIG 1: Statorpaket mit Kühlkanälen und kappenartigen Formteilen,
- FIG 2: einen Querschnitt durch ein Kühlgehäuse als separates Konstruktionselement,
- FIG 3: einen Längsschnitt durch ein Kühlgehäuse als separates Konstruktionselement,
- FIG 4: längsachsseitige Aufsicht auf FIG 5,
- FIG 5: perspektivische Darstellung des das Ständerpaket betreffenden Konstruktionselementes Kühlmantel.

FIG 1 zeigt ein Statorpaket 1 mit Wicklungsköpfen 2 an der jeweiligen Stirnseite des Statorpaketes 1. Im Statorpaket 1 befinden sich Kühlkanäle 4, welche strömungsmäßig voneinander getrennt sind. Ein Kühlmedium welches im Bereich des Statorpaketes 1 eine Bewegung in Achsrichtung vollzieht und im vorliegenden Beispiel als Luft 3 bezeichnet ist und die Kühlluft darstellt, findet an der außenliegenden Stirnseite des in der Figur rechtsseitig liegenden, kappenartigen Formteils 6 Einlass in die zu kühlende elektrische rotatorische Maschine.

Nach dem der Luftstrom rechtsseitig eingetreten ist, wird dieser in Radialrichtung nach außen umgelenkt und durchströmt zumindest teilweise die Wicklungsköpfe 2. Nach der Kühlung der in der vorliegenden Figur rechtsseitigen Wicklungsköpfe wird der durch die Luft 3 gebildete Luftstrom durch das in der Perspektive rechtsseitige, kappenartige Formteil 6 in die vorgesehenen Kühlkanäle 4 geleitet. Der Eintritt in den Kühlkanal 4 gelingt nur dort, wo das Endstück 18 Endstücköffnungen 14 aufweist. An den Endstückverschlüssen 7, welche eine beliebige Anzahl von Kühlkanälen abschließen ist ein in der Perspektive rechtsseitiger Eintritt des Luftstromes in den Kühlkanal 4 nicht möglich.

Nach Eintritt des Luftstromes in den Kühlkanal 4 ist die Bewegungsrichtung des Kühlmittels 5 in Axialrichtung vorgegeben. Am Ende des beströmten Kühlkanals 4 wird der Luftstrom durch die innere Kappenluftführung 9 übernommen. Der Luftstrom wird innerhalb des linksseitigen kappenartigen Formteils 10 in eine radiale Richtung geführt, wobei durch die nun in Achsmitte gerichtete Bewegungsrichtung der Luftstrom zumindest teilweise durch die Wicklungsköpfe hindurchtritt und diese kühlt. Nach dem Durchtritt des Luftstromes durch die Wicklungsköpfe 2 erfolgt eine schleifenartige Umlenkung der Bewegungsrichtung des Luftstroms, so dass dieser nun zurück in Richtung des rechtsseitigen kappenartigen Formteils 6 strömt. Nach dem radialen Luftverlauf an der Kappenaußenseite 16 gelangt der Luftstrom über die äußere Kappenluftführung 8 wieder in einen der vorgesehenen Kühlkanäle 4. Nach dem Durchlaufen des Kühlkanales 4 wird der Luftstrom am Luftaustritt 13 herausgeführt. Der Austritt ist durch den Endstückverschluss 7 hervorgerufen. Insbesondere sind allerdings auch zusätzliche Mittel zur Ausführung des Luftstroms denkbar.

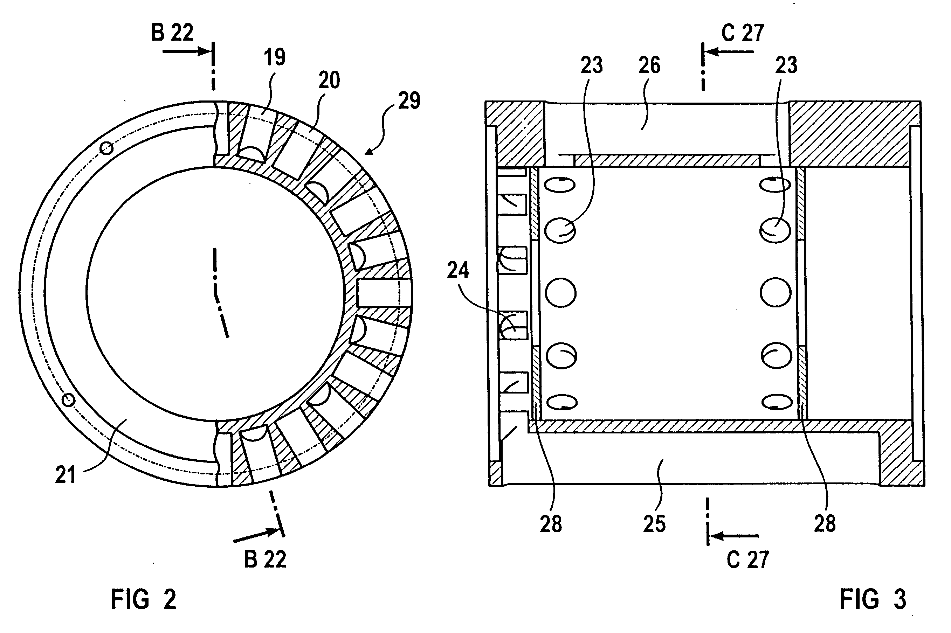

FIG 2 zeigt einen Querschnitt durch einen Kühlmantel 29 als separates Konstruktionselement 21. In der linken Bildhälfte wird die achsseitige Frontsicht des separaten Konstruktionselementes 21 gezeigt. In dem in der Figur 2 rechtsseitigem Schnitt zeigen sich die Kühlkanäle 19, 20. Die Kühlkanäle 19, 20 unterscheiden sich durch die Bewegungsrichtungen der von ihnen aufgenommenen und hindurchgeführten Luftströme, wobei hier beispielhaft die Richtungen 19 und 20 angegeben sind.

FIG 3 zeigt einen Kühlmantel als separates Konstruktionselement 21 als Schnittbild gemäß der Schnittebene B22 der FIG 2. Durch die Wicklungskopfbelüftungsöffnungen 23 gelingt es sowohl die Luft 5 nach Durchströmen des Wicklungskopfes in den Wicklungskopf spezifischen Kühlkanal über dem Statorpaket 26 zu führen als auch den Luftstrom von dort wieder über die Wicklungskopfbelüftungsöffnungen 23 in radialer Richtung zur Achse in den gegenüber liegenden Wicklungskopf 2 zu führen. Nach dem Durchströmen des zweiten Wicklungskopfes 2 wird die Luft 5 schleifenförmig umgeleitet und über die Statorrückluftöffnung 24 in den Rückluftkanal 25 geführt. Nach dem Erreichen des Endes des Rückluftkanales 25 wird die nunmehr erwärmte Luftstrom aus dem System geführt.

Luftstromtrennsegmente 28 gewährleisten die Trennung der Luftströme, welche den entsprechenden Wicklungskopf 2 noch durchströmen müssen bzw. durchströmt haben.

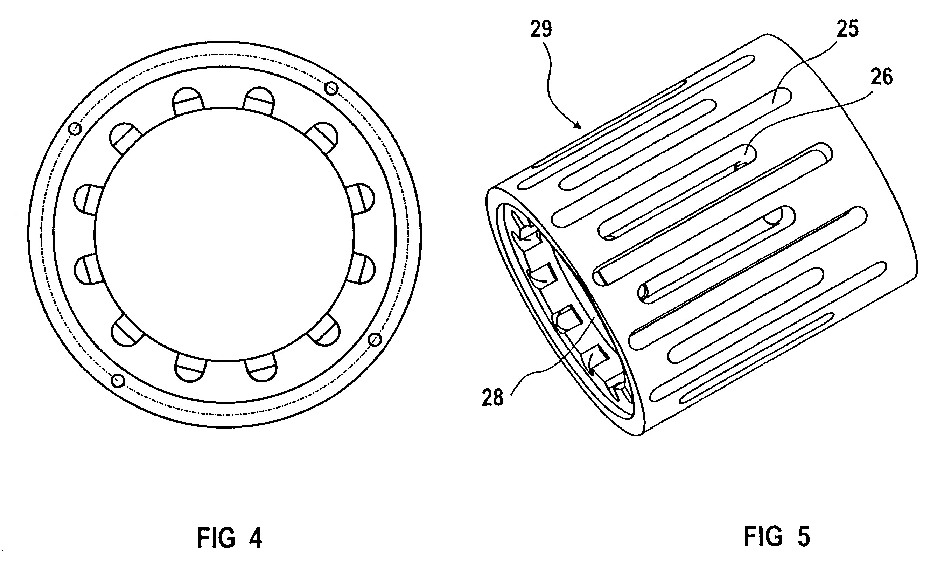

FIG 4 zeigt einen Schnitt gemäß Schnittebene C27 gemäß der FIG 3.

FIG 5 gibt eine perspektivische Darstellung des separaten Konstruktionselements 21 welches das Statorpaket 1 betrifft und auch als Kühlmantel 29 bezeichnet wird. Hier ist insbesondere die versetzte Anordnung des Rückluftkanals 25 in Bezug auf den Wicklungskopf spezifischen Kühlkanal über dem Statorpaket 26 auffällig. Werden die nutartigen Kanäle 25, 26 in gleicher Länge ausgeführt so ist darauf zu achten, dass zumindest die Öffnungen für die ein- bzw. ausströmende Luft 5 in den strömungsmäßig voneinander getrennten Kanälen mit unterschiedlichen Bewegungsrichtungen der Luft versetzt angeordnet sind.

## Patentansprüche

1. Luftgekühlte elektrische rotatorische Maschine mit einem Statorpaket (1), einem Rotor, einem Luftspalt zwischen Stator und Rotor, Wicklungsköpfen (2) an den achsseitigen Stirnseiten des Statorpaketes (1), wenigstens einem Lager, einem Mittel zur Kühlung, das zumindest zur Kühlung des Statorpaketes (1) beiträgt, strömungsmäßig voneinander getrennten Kühlkanälen (4) im und/oder am Statorpaket (1), die ein Beströmen mit Luft (3) in komplementären Richtungen gestatten, einer schleifenförmigen Luftstromführung, die sich durch die Richtungsumleitung der Luftströmung an den Wicklungsköpfen einstellt und zumindest einem Luftstrom, welcher durch genau einen Lüfter erzeugbar ist.

2. Luftgekühlte elektrische rotatorische Maschine nach Anspruch 1, **dadurch gekennzeichnet, dass** der Lüfter ein Eigenlüfter ist.

3. Luftgekühlte elektrische rotatorische Maschine nach Anspruch 1, **dadurch gekennzeichnet, dass** der Lüfter ein Fremdlüfter ist.

4. Luftgekühlte elektrische rotatorische Maschine nach zumindest einem der Ansprüche 1 bis 3, **dadurch gekennzeichnet, dass** zumindest ein Mittel vorhanden ist, welches zumindest einen Teil der Luftströmungen radial durch die Wicklungsköpfe führt.

5. Luftgekühlte elektrische rotatorische Maschine nach wenigstens einem der Ansprüche 1 bis 4, **dadurch gekennzeichnet, dass** wenigstens ein Lager gekühlt ist.

6. Luftgekühlte elektrische rotatorische Maschine nach wenigstens einem der Ansprüche 1 bis 5, **dadurch gekennzeichnet, dass** der Stator von zumindest einem Kühlmantel (29) mit voneinander strömungsmäßig getrennten Kühlkanälen (4) zumindest teilweise umfasst ist.

7. Luftgekühlte elektrische rotatorische Maschine nach wenigstens einem der Ansprüche 1 bis 6, **dadurch gekennzeichnet, dass** endseitig am Statorpaket (1) zumindest ein kappenartiges Formteil die komplementären Luftströme wechselseitig getrennt in entgegengesetzte radiale Richtungen leitet.

8. Luftgekühlte elektrische rotatorische Maschine nach Anspruch 7, **dadurch gekennzeichnet, dass** die kappenartige Formteile für beide Stirnseiten des Statorpaketes (1) identisch ausgeführt sind.

9. Luftgekühlte elektrische rotatorische Maschine nach zumindest einem der Ansprüche 7 oder 8, **dadurch gekennzeichnet, dass** der Kühlmantel (29) mit Kühlkanälen am Stator und die kappenartigen Formteile wenigstens einteilig ausgeführt sind.

10. Luftgekühlte elektrische rotatorische Maschine nach wenigstens einem der Ansprüche 1 bis 9, **dadurch gekennzeichnet, dass** in die Kühlluftkanäle oberflächenvergrößernde Elemente einsetzbar sind bzw. durch ihren Fertigungsprozess (Stanzen oder Gießen) bereits mit oberflächenvergrößerter Struktur ausgestattet sind.

11. Luftgekühlte elektrische rotatorische Maschine nach wenigstens einem der Ansprüche 1 bis 9, **dadurch gekennzeichnet, dass** die Kühlkanäle (4) oberflächenvergrößernde Strukturen aufweisen.
